# EUROPEAN PATENT SPECIFICATION

(11) **EP 2 451 748 B1**
(45) Date of publication and mention of the grant of the patent: **02.11.2016**
(21) Application number: 10796804.2
(22) Date of filing: 05.07.2010
(51) Int. Cl.: C02F 1/44, B01D 61/02, B01D 61/12, C02F 103/02, C02F 103/08

(54) **CLOSED CIRCUIT DESALINATION RETROFIT FOR IMPROVED PERFORMANCE OF COMMON REVERSE OSMOSIS SYSTEMS**
GESCHLOSSENE ENTSALZUNGSNACHRÜSTUNG ZUR VERBESSERTEN LEISTUNG VON GEMEINSAMEN REVERSEN OSMOSESYSTEMEN
RÉINSTALLATION DE DESSALEMENT EN CIRCUIT FERMÉ POUR PERFORMANCES AMÉLIORÉES DE SYSTÈMES À OSMOSE INVERSE COURANTS

(30) Priority: 05.07.2009 IL 19970009
(43) Date of publication of application: 16.05.2012
(73) Proprietor: Desalitech Ltd, 90836 Har Adar (IL)
(72) Inventor: EFRATY, Avi, 90836 Har Adar (IL)
(74) Representative: Ashton, Timothy
(86) International application number: PCT/IL2010/000537
(87) International publication number: WO 2011/004364

(56) References cited:
- EP-A1- 1 029 583
- WO-A1-02/09855
- WO-A2-2005/016830
- DE-A1- 2 622 461
- US-A1- 2004 245 177
- US-A1- 2008 023 410
- US-A1- 2008 230 476
- US-B1- 6 267 891
- US-B1- 6 468 431

## Description

### BACKGROUND OF THE INVENTION

The present invention relates to a Closed Circuit Desalination Retrofit (CCDR) apparatus for improved performance of common Reverse Osmosis (RO) systems.

### DESCRIPTION OF PRIOR ART

Closed Circuit Desalination (CCD) is a non conventional RO technology first reported in the late eighties by Szuz et al. in U.S. Pat. No 4,983,301 and by Bartt in U.S. Pat. No 4,814,086 to take place continuously by means of two side Tanks. Recently, a continuous CCD technology with a single container was reported in the PCT publication WO 2005/016830 A2, and more recently, a continuous CCD process without need of containers was reported in the PCT publication WO 2006/001007 A2. US 2008/023410 A1 describes an apparatus for continuous closed-circuit consecutive sequential desalination of a salt water solution by reverse osmosis that comprises a closed circuit system comprising one or more desalination modules having their respective inlets and outlets connected in parallel by conducing lines, each of desalination modules comprising of one or more membrane elements, a pressurising device for creating counter pressure to enable reverse osmosis desalination and replacement of released permeate by fresh, a circulation system for recycling the desalinated solution through the desalination modules, a conducting line systems for permeate collection from the desalination modules, a conducting line system for removing brine effluent, a valve system to enable periodic discharge of brine from the closed circuit without stopping desalination; and monitoring and control systems to enable continuous closed circuit desalination of desired recovery proceed in consecutive sequential steps under variable or constant pressure conditions.

DE 26 22 461 A1 describes a reverse osmosis system having separate pressurization and recirculation pumps.

Other known reverse osmosis systems are disclosed in US 6 468 431 B1, US 6 267 891 B1, EP1 1 029 583 A1 and WO 02/09855 A1.

Some common Brackish Water Reverse Osmosis (BWRO) applications, such as production of low salinity permeates for medical dialysis, are performed intentionally with low recovery at considerable waste of water and energy. The present invention describes a unique Closed Circuit Desalination Retrofit (CCDR) apparatus intended for facile integration with common BWRO systems for their improved performance.

### SUMMARY OF THE INVENTION

In one aspect of the invention, we provide an integrated system comprising: a Brackish Water Reverse Osmosis unit having an inlet, a pressurized brine outlet and a permeate outlet; and a non-autonomous closed circuit desalination retrofit unit for the further desalination of pressurized brine feed received from said Brackish Water Reverse Osmosis unit, the retrofit unit comprising:
a closed circuit comprising one or more desalination modules, the or each desalination module having a respective desalination module inlet and a desalination module outlet connected in parallel by respective first and second conducting lines, the or each desalination module comprising one or more membrane elements;
a third conducting line with circulation means for recycling concentrate from desalination module outlets to desalination module inlets of the or each desalination module;
a fourth conducting line for supply of said pressurized brine feed from said Brackish Water Reverse Osmosis unit to said closed circuit of said retrofit unit;
a fifth conducting line of permeate from said retrofit unit to the inlet of said Brackish Water Reverse Osmosis unit or to the permeate outlet of said Brackish Water Reverse Osmosis unit;
a first valve means (AV) positioned in the third conducting line, wherein the first valve means (AV) is a two-way valve configured to enable flow from desalination module outlets to desalination module inlets of the or each desalination module and for discharge of brine from desalination module outlets of the or each desalination module in said retrofit unit without stopping desalination;
a sixth conducting line at outlet of said first valve means (AV) to enable discharge of brine from said closed circuit of said retrofit unit;
a sensor for measuring electric conductivity of recycled concentrate in said closed circuit of said retrofit unit to enable a follow up of desalination recovery in said closed circuit; and
monitoring and control systems configured to enable continuous closed circuit desalination of desired recovery in said retrofit unit,
wherein the integrated system includes a second valve means (V) which is positioned in the fourth conducting line and is configurable between a first state in which said pressurized brine feed is fully diverted from said Brackish Water Reverse Osmosis unit to said closed circuit of said retrofit unit thereby activating operation of said retrofit unit and a second state in which said pressurized brine feed is stopped from flowing from said Brackish Water Reverse Osmosis unit to said closed circuit of said retrofit unit thereby terminating operation of said retrofit unit, wherein the retrofit unit is configured to perform a two-step consecutive sequential process, wherein a first step includes closed circuit desalination of recycled concentrate mixed with fresh pressurized feed through the or each desalination module experienced most of the time and wherein a second step includes a plug flow desalination process whereby brine in the closed circuit is replaced with fresh pressurized feed, and wherein brine discharge and fresh feed recharge take place at a desired desalination recovery level.

The Brackish Water Reverse Osmosis unit may be applicable to any of the following applications: medical dialysis, high quality permeates, and for the upgrade of water supplies for domestic, industrial and agricultural applications.

A booster pump may be positioned in said fourth conducting line for supply of pressurized brine from said Brackish Water Reverse Osmosis unit to said closed circuit of said retrofit unit to enable pressure increase of said supply if insufficient to enable said retrofit unit to reach the desired desalination recovery.

A booster pump may be positioned in said fifth conducting line of permeate from said retrofit unit to the inlet of said Brackish Water Reverse Osmosis unit for blending with the external feed source to said Brackish Water Reverse Osmosis unit when supplied under pressure.

Permeates of said retrofit unit and said Brackish Water Reverse Osmosis unit may be combined.

The integration of a common BWRO unit with the inventive CCDR unit achieved by means of a fourth conducting line for pressurized brine effluent from the outlet of the former to the inlet of the latter and a fifth conducting line for permeate from the latter to the inlet feed line of the former or, alternatively, a fifth conducting line for combining the produced permeate of the latter and the former together.

The inventive integrated BWRO-CCDR system enables enhanced feed source recovery concomitant with improved permeate quality and reduced energy demand.

### BRIEF DESCRIPTION OF THE DRAWINGS

**Fig 1** is a schematic flow diagram showing the integration of BWRO and CCDR units in a system for high quality permeates
**Fig 2** is a schematic flow diagram showing the integration of BWRO and CCDR units in a system for high desalination recovery.
**Fig. 3** is a schematic diagram of a CCDR unit during a closed circuit desalination mode of operation.
**Fig. 4** is a schematic diagram of a CCDR unit with a permeate pressure booster pump during a closed circuit desalination mode of operation.
**Fig. 5** is a schematic diagram of a CCDR unit with a feed pressure booster pump during a closed circuit desalination mode of operation.
**Fig. 6** is a schematic diagram of a CCDR unit with both a permeate pressure booster pump and a feed pressure booster pumps during a closed circuit desalination mode of operation.

### DETAILED DESCRIPTION OF THE INVENTION

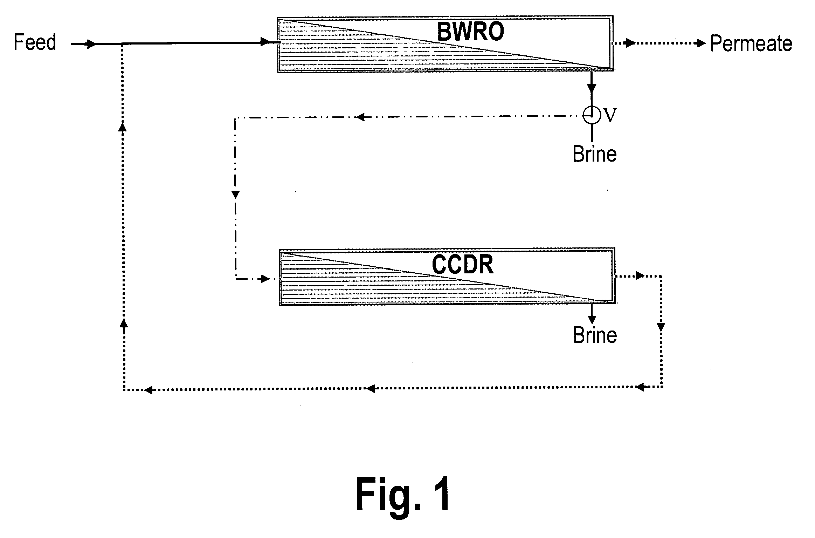

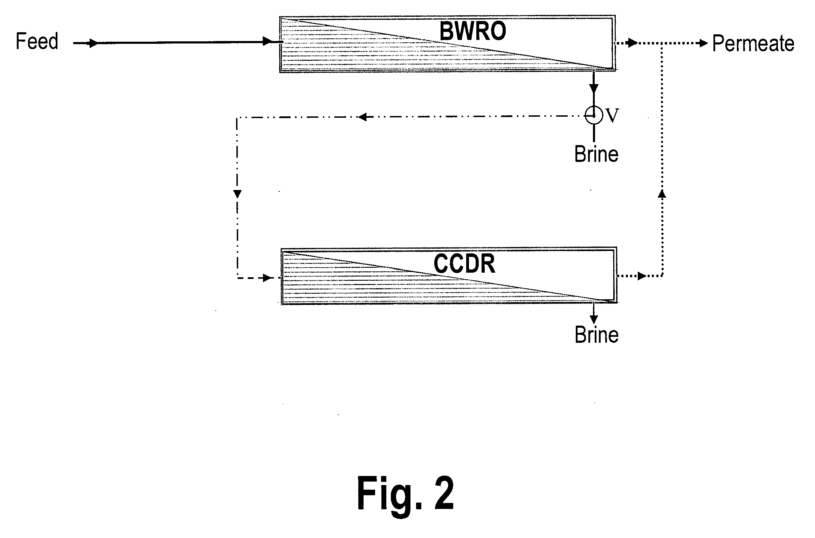

The inventive systems depicted in **Fig. 1** **and** **Fig. 2** propose the adding of a Closed Circuit Desalination Retrofit (CCDR) unit to a common Reverse Osmosis Brackish Water (BWRO) unit in an integrated system for increased recovery and improved quality of permeates. The CCDR and BWRO units in the system depicted in **Fig. 1** are linked together by fourth and fifth conducting lines such that the pressurized brine of the latter becomes the feed to the former and the permeate of the former becomes part of the feed to the latter. The inventive system depicted in **Fig. 2** differs from that in **Fig. 1** in the arrangement of the fifth conducting line, since in the former system **(****Fig. 2****)** permeates of the CCDR and BWRO units are combined; whereas, in the latter system **(****Fig. 1****)** the permeate of the CCDR unit becomes part of the feed to the BWRO unit. Both inventive systems displayed in **Fig. 1** and **Fig. 2** allow the attainment of high desalination recovery, with the former system **(****Fig. 1**) intended particularly for production of high quality permeates and with the latter system **(****Fig. 2****)** intended to serve as a multi stage recovery booster for existing BWRO systems of poor desalination recovery.

The integrated BWRO-CCDR systems described in **Fig. 1** and **Fig. 2** comprise any common BWRO unit of prior art coupled with the inventive CCDR unit by means of the fourth and fifth conducting lines. The claims of the present invention are made specifically with regards to the new CCDR unit and its integration with a common BWRO unit into a system of greatly improved performance as compared with that of the latter. Accordingly, the core of the invention relates to systems wherein a CCDR unit receives pressurized feed from a common BWRO unit with permeate produced by the CCDR unit either recycled as part of the feed to the BWRO unit according to the system depicted in **Fig. 1** or, alternatively, combined with the permeate produced by the BWRO unit according to the system depicted in **Fig. 2****.** The CCDR units in the systems depicted in **Fig. 1** and **Fig. 2** perform most of the time on the basis of Closed Circuit Desalination (CCD) principles with flow rates of pressurized feed and permeate being the same (100% recovery); and part of the time on the basis of Plug Flow Desalination (PFD) principles to enable the rejection of brine effluent from the close circuit of the CCDR unit and its replacement with fresh pressurized feed while desalination is continued at a reduced desalination recovery. Compared with the performance of an isolated BWRO unit, the integrated systems described in **Fig. 1** **and** **Fig. 2** enable higher feed source recovery, improved quality permeates and significant savings in energy since the pressurized brine flow from the BWRO unit becomes the principle energy source of the CCDR units.

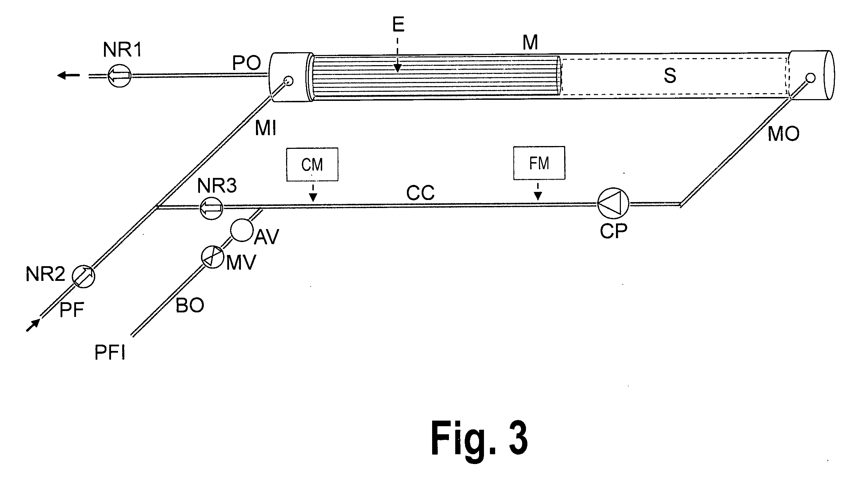

The CCDR unit of the embodiment displayed in **Fig. 3** comprises a single module (M) with one membrane element (E) and one element spacer (S), a circulation pump (CP) for the recycling of pressurized concentrate from module outlet (MO) to module inlet (MI) through a third conducting line (CC), a fourth conducting line (PF) for admitting fresh pressurized feed to the closed circuit via a feed inlet (PFI) positioned upstream of the module inlet (MI), a no-return valve means (NR1, NR2 and NR3) to maintain the desired flow direction in the various parts of the unit, an actuated two-way valve means (AV) to enable occasional replacement of brine effluent with fresh feed in said closed circuit, a manual valve means (MV) to enable the attainment of a desired pressure drop in said closed circuit of the CCDR unit while AV is opened for brine release, a monitoring means such as a flow meter (FM) and an electric conductivity meter (CM) of recycled concentrate, and control means to enable the automated actuation of said CCDR unit effectively and efficiently at a desired desalination recovery level. The principle functions of the CP in the preferred embodiment **(****Fig. 3****)** are to offset the pressure drop between module inlet and outlet as well as to enable control over membrane cross flow in order to minimize adverse effects of concentration polarization.

The CCDR unit of the integrated systems depicted in **Fig.1** and **Fig.2** is of the preferred embodiment displayed in **Fig. 3** for application in cases where the feed flow of pressurized brine received from the BWRO unit is of sufficient pressure to enable the attainment of a desired recovery level. The preferred embodiment in **Fig. 3** assumes permeate production and delivery at near atmospheric pressure without need for pressure booster means

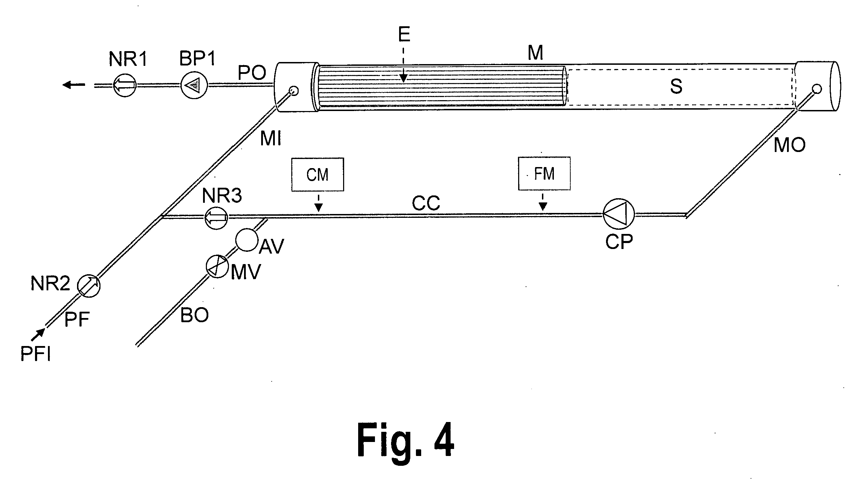

The CCDR unit of the integrated system depicted in **Fig. 1** is of the preferred embodiment displayed in **Fig. 4** for application in cases where the feed supplied to the BWRO unit of said system is under mild pressure (e.g., 2-5 bar). The purpose of the installed booster pump (BP1) on the fifth conducting line (PO) of said CCDR unit **(****Fig. 4****)** is to raise permeate pressure to the desired inlet pressure of the BWRO unit of the system displayed **Fig. 1****.**

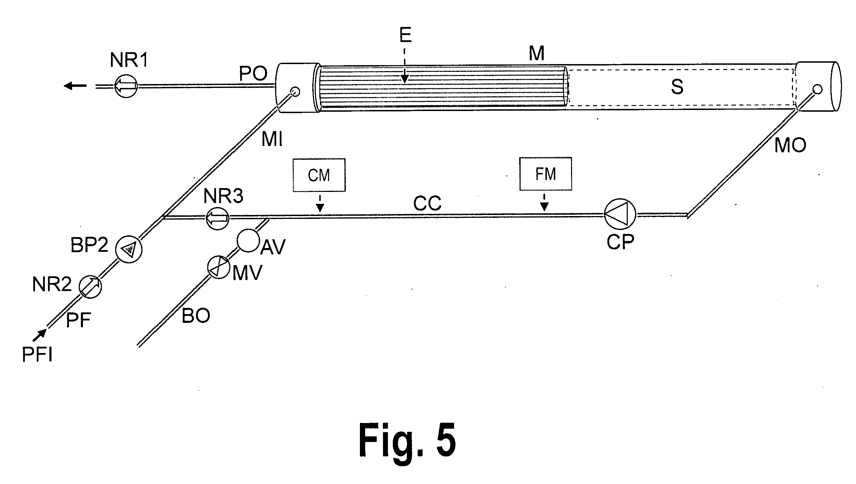

The CCDR unit of the integrated systems depicted in **Fig.1** and **Fig.2** is of the preferred embodiment displayed in **Fig. 5** for application in cases where the feed flow of pressurized brine received from the BWRO unit is of insufficient pressure to enable the attainment of a desired recovery level; therefore, pressure booster means required (BP2). The preferred embodiment in **Fig. 5** assumes permeate production and delivery at near atmospheric pressure without need for permeate pressure booster means.

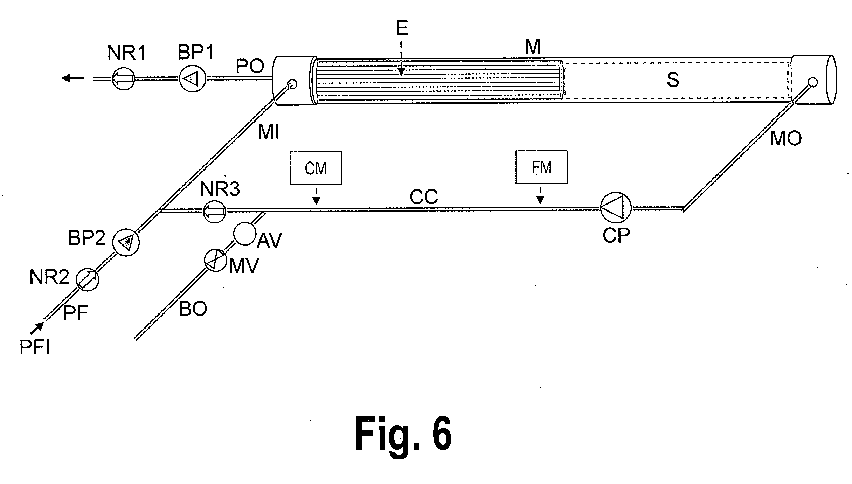

The CCDR unit of the integrated system depicted in **Fig. 1** is of the preferred embodiment displayed in **Fig. 6** for application in cases where the feed pressure to said unit and the permeate pressure from said unit need to be raised by a pressure booster means (BP2 and BP1, respectively).

The method of operation of the integrated systems displayed in **Fig. 1** **-** **Fig. 2** proceeds as follows. The pressurized brine flow from the common BWRO unit is fully diverted to the inlet of the CCDR unit by the valve means V, an operation whereby all the functions in the latter unit are activated. Conversely, the stopping of pressurize brine flow into the CCDR unit by the valve means V terminates the operation of this unit automatically. The CCDR units **(****Fig. 3** **-** **Fig. 6****)** of the integrated systems displayed in **Fig. 1** **-** **Fig. 2** experience most of the time a closed circuit desalination mode of operation of 100% recovery with feed flow (**Q**feed) and permeate flow (Qpermeate) being the same (Q_{feed}=Qₚₑᵣₘₑₐₜₑ) and this mode is proceeded by a brief step of plug flow desalination (Q_{feed} = Qₚₑᵣₘₑₐₜₑ + Q_{brine}) whereby brine in the closed circuit is replaced by fresh pressurized feed at a reduced desalination recovery. Brine rejection from the closed circuit of the CCDR unit takes place by the occasional opening of valve AV when the conductivity the recycled concentrate reaches a fixed predefined high value which manifests the attainment of a desired recovery and the closure of this valve will be proceeded at a fixed predefined low conductivity value which manifests the complete replacement of rejected brine with fresh pressurized feed. Accordingly, the actuation of valve AV is fully controlled from the monitored conductivity (CM) of the recycled concentrate and its high and low predefined set points.

The CCDR units of the preferred embodiments in **Fig. 3** **-** **Fig. 6** of the integrated systems displayed in **Fig. 1** **-** **Fig. 2** are none autonomous since fully rely on pressurized feed supplied from the BWRO units of the systems. Accordingly, the method implicates common BWRO units as the pressurized feed source to CCDR units which perform a two-step consecutive sequential process with a closed circuit desalination mode of operation of 100% recovery experienced most of the time and with brief intervals plug flow desalination of reduced recovery taking place occasionally for the discharge of brine from the closed circuit and its replacement with fresh pressurized feed which is the brine effluent of the BWRO units. In simple terms, the method may be viewed as the integration between a single stage BWRO unit and a CCDR unit of multistage desalination capability for the attainment of high recovery with energy efficiency. The CCDR units and the integrated systems of the present invention suggest an effective approach for the upgrade of existing inefficient BWRO systems.

It will be understood that the design of the preferred embodiments of the inventive system displayed in **Fig. 1** **-** **Fig. 6** is schematic and simplified and is not to be regarded as limiting the invention. In practice, the desalination apparatus according to the invention may comprise many additional lines, branches, valves, and other installations and devices as necessary according to specific requirements while still remaining within the scope of the invention and claims.

The preferred embodiments depicted in **Fig. 3** **-** **Fig. 6** display a single module unit apparatus with a single membrane element and a spacer and this for the purpose of simplicity, clarity, uniformity and the convenience of presentation. It will be understood that the general design according to the invention is neither limited nor confined to single module apparatus and/or to apparatus with just one membrane element per module. Specifically, it will be understood that **CCDR** units of the inventive apparatus and method may comprise more than one module with inlets and outlets of modules connected in parallel to the first and second conducting lines and that each of the modules may comprise one or more than one membrane element with or without spacers.

Concentrate recycling through the closed circuit of the inventive system displayed in **Fig. 3** **-** **Fig. 6** is done by circulation systems. It will be understood that the circulation systems according to the invention may comprise a single circulation pump, or instead, several circulation pumps, applied simultaneously in parallel and/or in series.

It will be obvious to those versed in the art that the described desalination method may be operated with modular units and/or non-modular desalination apparatus of different designs, as already explained hereinabove in respect of the inventive apparatus, as long as such apparatus comprises a closed circuit of conducting line with one module or more than one module with their inlets and outlets connected in parallel to the closed circuit with each module containing one membrane element or more than one membrane elements; circulation systems; fourth conducting lines with or without pressure booster pumps for supply of pressurized brine feed; fifth conducting lines; valves means positioned in the third conducting line for brine discharge; sixth conducting lines for brine removal; monitoring devices of pressure, flow, and conductivity; and control means whereby the entire system is operated continuously.

It will be obvious to skilled in the art of reverse osmosis that the inventive system can apply in general to improve the feed source recovery and permeate quality of any common BWRO system, and specifically, for the upgrade of existing BWRO systems including those that are used for medical dialysis and/or other diverse reverse osmosis applications for the obtainment better quality permeates with lower energy demand.

### EXAMPLE

The preferred embodiment of the inventive apparatus is exemplified with a system according to the design depicted in **Fig. 1** comprising of a common **BWRO** system of the type used for Medical Dialysis (MD) with regular membrane element for Brackish Water (e.g., Net Driving Pressure (NDP) of 15 bar under Test Conditions) which is operated with 50% desalination recovery with a feed source of 400 ppm salinity supplied with flow rate of 2.5 m³/h under near atmosphere pressure. The integrated Closed Circuit Desalination Retrofit (CCDR) unit in the exemplified system is of the design depicted in **Fig. 3** comprising a module (8") with a single low energy membrane element for Brackish Water (e.g., ESPA2+) and a spacer in the length of a single element; a circulation pump (CP) with recycling flow rate of 7.1 m³/h; a Flow Meter (FM) monitor of the recycled concentrate; pressure lines (1.5") made of SS316; Electrically Actuated Valve (AV) operated by signals received from a Conductivity Monitor (CM), and No-Return valves (NR1, NR2 and NR3) for flow control in the desired direction in the CCDR unit depicted in **Fig. 3****.**

The exemplified CCDR unit **(****Fig. 3****)** receives a steady stream (1.25 m3/h) of fixed pressure feed (∼14 bar) of 800 ppm salinity from the BWRO unit in the system **(****Fig. 1****)** and performs a continuous two-step consecutive sequential desalination process with extended Closed Circuit Desalination intervals (∼23 minutes each) of 100% recovery and mean permeate salinity output of 14 ppm; and with brief Plug Flow Desalination intervals (∼3 minutes each) of ∼20% recovery and mean permeate salinity output of 5 ppm during which brine is discharged and the closed circuit recharged with fresh feed. This two-step consecutive sequential process manifests an over all recovery of 89% with respect to the CCDR unit in the system and the actuation the valve means AV in the unit **(****Fig.** 3 for brine discharge initiated at an electric conductivity manifesting recycled concentrate salinity of 7,272 ppm and terminated at an electric conductivity manifesting recycled concentrate salinity of about 1,000 ppm.

Over the duration of the two-step consecutive sequence process of 26 minutes by the CCDR unit of the depicted design in **Fig. 3****,** the feed volume demand of the BWRO unit in the system described by **Fig. 1** is 1,083.3 liters of which 479.2 liters with an average salinity of ∼14 ppm originate from the CCDR unit in the system and 604.1 liters of 400 ppm salinity supplied from the external source. In simple terms, the blend supplied as feed to the BWRO unit in **Fig. 1** is of an average salinity of 229.3 ppm instead of 400 PPM; therefore, the salinity of permeate supplied by the exemplified system for medical dialysis is around 2.8 ppm instead of 5.0 ppm by a common BWRO system.

The volume of discharge brine during two-step consecutive sequence of 26 minutes by the CCDR unit of the depicted design in **Fig. 3** is about 50 liters, or the volume of concentrate in the closed circuit, and this implied an overall recovery of 91.7% of the external source.

## Claims

1. An integrated system comprising: a Brackish Water Reverse Osmosis unit having an inlet, a pressurized brine outlet and a permeate outlet; and a non-autonomous closed circuit desalination retrofit unit for the further desalination of pressurized brine feed received from said Brackish Water Reverse Osmosis unit, the retrofit unit comprising:
a closed circuit comprising one or more desalination modules, the or each desalination module having a respective desalination module inlet and a desalination module outlet connected in parallel by respective first and second conducting lines, the or each desalination module comprising one or more membrane elements;
a third conducting line with circulation means for recycling concentrate from desalination module outlets to desalination module inlets of the or each desalination module;
a fourth conducting line for supply of said pressurized brine feed from said Brackish Water Reverse Osmosis unit to said closed circuit of said retrofit unit;
a fifth conducting line of permeate from said retrofit unit to the inlet of said Brackish Water Reverse Osmosis unit or to the permeate outlet of said Brackish Water Reverse Osmosis unit;
a first valve means (AV) positioned in the third conducting line, wherein the first valve means (AV) is a two-way valve configured to enable flow from desalination module outlets to desalination module inlets of the or each desalination module and for discharge of brine from desalination module outlets of the or each desalination module in said retrofit unit without stopping desalination;
a sixth conducting line at outlet of said first valve means (AV) to enable discharge of brine from said closed circuit of said retrofit unit;
a sensor for measuring electric conductivity of recycled concentrate in said closed circuit of said retrofit unit to enable a follow up of desalination recovery in said closed circuit; and
monitoring and control systems configured to enable continuous closed circuit desalination of desired recovery in said retrofit unit,
wherein the integrated system includes a second valve means (V) which is positioned in the fourth conducting line and is configurable between a first state in which said pressurized brine feed is fully diverted from said Brackish Water Reverse Osmosis unit to said closed circuit of said retrofit unit thereby activating operation of said retrofit unit and a second state in which said pressurized brine feed is stopped from flowing from said Brackish Water Reverse Osmosis unit to said closed circuit of said
retrofit unit thereby terminating operation of said retrofit unit, wherein the retrofit unit is configured to perform a two-step consecutive sequential process, wherein a first step includes closed circuit desalination of recycled concentrate mixed with fresh pressurized feed through the or each desalination module experienced most of the time and wherein a second step includes a plug flow desalination process whereby brine in the closed circuit is replaced with fresh pressurized feed, and wherein brine discharge and fresh feed recharge take place at a desired desalination recovery level.

2. An integrated system according to claim 1, wherein said Brackish Water Reverse Osmosis unit is applicable to any of the following applications: medical dialysis, high quality permeates, and for the upgrade of water supplies for domestic, industrial and agricultural applications.

3. An integrated system according to claim 1, wherein a booster pump is positioned in said fourth conducting line for supply of pressurized brine from said Brackish Water Reverse Osmosis unit to said closed circuit of said retrofit unit to enable pressure increase of said supply if insufficient to enable said retrofit unit to reach the desired desalination recovery.

4. An integrated system according to claim 1, wherein a booster pump is positioned in said fifth conducting line of permeate from said retrofit unit to the inlet of said Brackish Water Reverse Osmosis unit for blending with the external feed source to said Brackish Water Reverse Osmosis unit when supplied under pressure.

5. An integrated system according to claim 1 wherein permeates of said retrofit unit and said Brackish Water Reverse Osmosis unit are combined.

## Patentansprüche

1. Integriertes System, umfassend: eine reverse Osmoseeinheit für Brackwasser aufweisend einen Einlass, einen druckbeaufschlagten Soleauslass und einen Permeatauslass; und eine nicht autonome geschlossene Entsalzungsnachrüstungseinheit für die weitere Entsalzung von druckbeaufschlagter Solezufuhr, die aus besagter reverser Osmoseeinheit für Brackwasser eingeht, wobei die Nachrüstungseinheit Folgendes umfasst:
einen geschlossen Kreislauf umfassend ein oder mehrere Entsalzungsmodule, wobei das oder jedes Entsalzungsmodul einen jeweiligen Entsalzungsmoduleinlass und einen Entsalzungsmodulauslass mit parallelem Anschluss durch jeweilige erste und zweite Führungsleitungen aufweist, wobei das oder jedes Entsalzungsmodul ein oder mehrere Membranelemente umfasst;
eine dritte Führungsleitung mit Umwälzmittel zum Recyclen von Konzentrat von Entsalzungsmodulauslässen zu Entsalzungsmoduleinlässen des oder jedes Entsalzungsmoduls;
eine vierte Führungsleitung zur Lieferung von besagter druckbeaufschlagter Solezufuhr von besagter reverser Osmoseeinheit für Brackwasser zu besagtem geschlossenem Kreislauf von besagter Nachrüstungseinheit;
eine fünfte Führungsleitung für Permeat von besagter Nachrüstungseinheit zum Einlass von besagter reverser Osmoseeinheit für Brackwasser oder zum Permeatauslass von besagter reverser Osmoseeinheit für Brackwasser;
ein erstes Ventilmittel (AV), das in der dritten Führungsleitung positioniert ist, worin das erste Ventilmittel (AV) ein Zweiwegeventil ist, das dafür konfiguriert ist, Fluss von Entsalzungsmodulauslässen zu Entsalzungsmoduleinlässen des oder jedes Entsalzungsmoduls zu ermöglichen, und für das Austragen von Sole aus Entsalzungsmodulauslässen des oder jedes Entsalzungsmoduls in besagter Nachrüstungseinheit ohne Unterbrechung der Entsalzung;
eine sechste Führungsleitung am Auslass von besagtem erstem Ventilmittel (AV), um das Austragen von Sole aus besagtem geschlossenem Kreislauf von besagter Nachrüstungseinheit zu ermöglichen;
einen Sensor zur Messung der elektrischen Leitfähigkeit von recycletem Konzentrat in besagtem geschlossenem Kreislauf von besagter Nachrüstungseinheit, um Entsalzungsrückgewinnungs-Folgemaßnahmen in besagtem geschlossenem Kreislauf zu ermöglichen; und
Überwachungs- und Steuerungssysteme, die dafür konfiguriert sind, kontinuierliche geschlossene Entsalzung der gewünschten Rückgewinnung in besagter Nachrüstungseinheit zu ermöglichen,
worin das integrierte System ein zweites Ventilmittel (V) beinhaltet, das in der vierten Führungsleitung positioniert ist und zwischen einem ersten Zustand, in dem besagte druckbeaufschlagte Solezufuhr voll von besagter reverser Osmoseeinheit für Brackwasser zu besagtem geschlossenem Kreislauf von besagter Nachrüstungseinheit umgelenkt wird, wodurch Betrieb der besagten Nachrüstungseinheit aktiviert wird, und einem zweiten Zustand, in dem besagte druckbeaufschlagte Solezufuhr am Fließen von besagter reverser Osmoseeinheit für Brackwasser zu besagtem geschlossenem Kreislauf der besagten Nachrüstungseinheit gehindert wird, wodurch Betrieb der besagten Nachrüstungseinheit beendet wird, konfigurierbar ist, worin die Nachrüstungseinheit dafür konfiguriert ist, einen zwei Schritte umfassenden konsekutiven sequenziellen Vorgang durchzuführen, worin ein erster Schritt geschlossene Entsalzung von recycletem Konzentrat, gemischt mit frischer druckbeaufschlagter Zufuhr, durch das oder jedes Entsalzungsmodul, was die meiste Zeit vorkommt, beinhaltet, und worin ein zweiter Schritt ein Plug-Flow-Entsalzungsverfahren beinhaltet, wodurch Sole im geschlossenen Kreislauf durch frische druckbeaufschlagte Zufuhr ersetzt wird, und worin Soleaustrag und Frischzufuhr-Nachfüllung auf einem gewünschten Entsalzungsrückgewinnungsniveau erfolgen.

2. Integriertes System nach Anspruch 1, worin besagte reverse Osmoseeinheit für Brackwasser auf beliebige der folgenden Anwendungen zutrifft: medizinische Dialyse, hochwertige Permeate, und zur Aufwertung von Wasserversorgungen für häusliche, industrielle und landwirtschaftliche Anwendungen.

3. Integriertes System nach Anspruch 1, worin eine Boosterpumpe in besagter vierter Führungsleitung zur Lieferung von druckbeaufschlagter Sole von besagter reverser Osmoseeinheit für Brackwasser zu besagtem geschlossenem Kreislauf der besagten Nachrüstungseinheit positioniert ist, um Druckerhöhung von besagter Versorgung zu ermöglichen, falls unzureichend, um es besagter Nachrüstungseinheit zu ermöglichen, die gewünschte Entsalzungsrückgewinnung zu erzielen.

4. Integriertes System nach Anspruch 1, worin eine Boosterpumpe in besagter fünfter Führungsleitung für Permeat von besagter Nachrüstungseinheit zum Einlass der besagten reversen Osmoseeinheit für Brackwasser zum Mischen mit der externen Zufuhrquelle zu besagter reverser Osmoseeinheit für Brackwasser, bei Zuführung unter Druck, positioniert ist.

5. Integriertes System nach Anspruch 1, worin Permeate der besagten Nachrüstungseinheit und besagten reversen Osmoseeinheit für Brackwasser kombiniert sind.

## Revendications

1. Un système intégré comprenant : une unité d'osmose inverse d'eau saumâtre ayant une entrée, une sortie de saumure pressurisée et une sortie de perméat ; et une unité de rattrapage de dessalement en circuit fermé non autonome pour le dessalement ultérieur de l'alimentation en saumure pressurisée reçue de ladite unité d'osmose inverse d'eau saumâtre, l'unité de rattrapage comprenant :
un circuit fermé comprenant un ou plusieurs modules de dessalement, le ou les modules de dessalement ayant une entrée de module de dessalement et une sortie de module de dessalement respectives raccordées en parallèle par des premier et deuxième conduits conducteurs respectifs, le ou les modules de dessalement comprenant un ou plusieurs éléments de membrane ;
un troisième conduit conducteur ayant un mécanisme de circulation pour recycler le concentré depuis les sorties de module de dessalement vers les entrées de module de dessalement du ou des modules de dessalement ;
un quatrième conduit conducteur pour l'approvisionnement de ladite alimentation en saumure pressurisée depuis ladite unité d'osmose inverse d'eau saumâtre vers ledit circuit fermé de ladite unité de rattrapage ;
un cinquième conduit conducteur de perméat depuis ladite unité de rattrapage vers l'entrée de ladite unité d'osmose inverse d'eau saumâtre ou vers la sortie de perméat de ladite unité d'osmose inverse d'eau saumâtre ;
un premier mécanisme de vanne (AV) positionné dans le troisième conduit conducteur, dans lequel le premier mécanisme de vanne (AV) est une vanne à deux voies, configurée pour permettre l'écoulement depuis les sorties de module de dessalement vers les entrées de module de dessalement du ou des modules de dessalement et pour décharger la saumure des sorties du module de dessalement du ou des modules de dessalement dans ladite unité de rattrapage sans arrêter le dessalement ;
un sixième conduit conducteur à la sortie dudit premier mécanisme de vanne (AV) pour permettre la décharge de la saumure depuis ledit circuit fermé de ladite unité de rattrapage ;
un capteur pour mesurer la conductivité électrique du concentré recyclé dans ledit circuit fermé de ladite unité de rattrapage pour permettre un suivi de la récupération de dessalement dans ledit circuit fermé ; et
des systèmes de contrôle et de régulation configurés pour permettre le dessalement continu en circuit fermé de ladite récupération souhaitée dans ladite unité de rattrapage,
dans lequel le système intégré inclut un deuxième mécanisme de vanne (V) qui est positionné dans le quatrième conduit conducteur et est configurable entre un premier état dans lequel ladite alimentation en saumure pressurisée est entièrement détournée de ladite unité d'osmose inverse d'eau saumâtre vers ledit circuit fermé de ladite unité de rattrapage ce qui actionne le fonctionnement de ladite unité de rattrapage et un deuxième état dans lequel ladite alimentation en saumure pressurisée est interdite d'écoulement de ladite unité d'osmose inverse d'eau saumâtre vers ledit circuit fermé de ladite unité de rattrapage ce qui termine le fonctionnement de ladite unité de rattrapage,
dans lequel l'unité de rattrapage est configurée pour exécuter un processus séquentiel de deux étapes consécutives, dans lequel une première étape inclut le dessalement en circuit fermé du concentré recyclé mélangé avec la nouvelle alimentation pressurisée à travers le ou les modules de dessalement survenant la plupart du temps et dans lequel une deuxième étape inclut un processus de dessalement à écoulement piston grâce à quoi la saumure qui est dans le circuit fermé est remplacée par la nouvelle alimentation pressurisée, et
dans lequel la décharge de saumure et la recharge en nouvelle alimentation pressurisée ont lieu à un niveau de récupération de dessalement souhaité.

2. Un système intégré selon la revendication 1, dans lequel ladite unité d'osmose inverse d'eau saumâtre est applicable à l'une quelconque des applications suivantes : dialyse médicale, perméats de haute qualité et pour l'amélioration des approvisionnements en eau des applications domestiques, industrielles et agricoles.

3. Un système intégré selon la revendication 1, dans lequel une pompe de surpression est positionnée dans ledit quatrième conduit conducteur de l'approvisionnement de l'alimentation en saumure pressurisée depuis ladite unité d'osmose inverse d'eau saumâtre vers ledit circuit fermé de ladite unité de rattrapage pour permettre l'augmentation de pression dudit approvisionnement si celle-ci est insuffisante pour permettre à ladite unité de rattrapage d'atteindre la récupération de dessalement souhaitée.

4. Un système intégré selon la revendication 1, dans lequel une pompe de surpression est positionnée dans ledit cinquième conduit conducteur de perméat depuis ladite unité de rattrapage vers l'entrée de ladite unité d'osmose inverse d'eau saumâtre pour se mélanger avec la source d'alimentation externe vers ladite unité d'osmose inverse d'eau saumâtre lors de l'approvisionnement sous pression.

5. Un système intégré selon la revendication 1 dans lequel les perméats de ladite unité de rattrapage et de ladite unité d'osmose inverse d'eau saumâtre sont combinés.
